# EUROPÄISCHE PATENTANMELDUNG

(11) **EP 2 942 684 A1**
(43) Veröffentlichungstag der Anmeldung: **11.11.2015**
(21) Anmeldenummer: 14167572.8
(22) Anmeldetag: 08.05.2014
(51) Int. Cl.: G05B 19/418, G05B 23/02

(54) **Verfahren zum Zugriff auf Rezeptelemente eines Steuerrezepts**

(71) Anmelder: Siemens Aktiengesellschaft, 80333 München (DE)
(72) Erfinder: Roßkopf, Harald, 76327 Pfinztal-Wöschbach (DE)

(57) **Zusammenfassung**

Die Erfindung betrifft ein Verfahren zum Zugriff auf Rezeptelemente eines auf einer grafischen Benutzeroberfläche eines Batch-Clients darstellbaren Rezepts, welches zur Steuerung eines Batchprozesses mittels eines Batch-Servers vorgesehen ist, wobei während des Steuerbetriebs der Batch-Server das Rezept abarbeitet und korrespondierend dazu ein mit dem Batch-Server online verbundenes Automatisierungsgerät den Rezeptelementen zugeordnete Softwarebausteine eines Steuerprogramms verarbeitet. Es werden Maßnahmen vorgeschlagen, mittels welcher ein schneller Zugriff auf Rezeptelemente ermöglicht sowie ein Zugriff auf diese Rezeptelemente vereinfacht wird.

## Beschreibung

Die Erfindung betrifft ein Verfahren zum Zugriff auf Rezeptelemente eines auf einer grafischen Benutzeroberfläche eines Batch-Clients darstellbaren Rezepts, welches zur Steuerung eines Batchprozesses mittels eines Batch-Servers vorgesehen ist, wobei während des Steuerbetriebs der Batch-Server das Rezept abarbeitet und korrespondierend dazu ein mit dem Batch-Server online verbundenes Automatisierungsgerät den Rezeptelementen zugeordnete Softwarebausteine eines Steuerprogramms verarbeitet. Darüber hinaus betrifft die Erfindung ein Automatisierungssystem, welches zur Durchführung des Verfahrens geeignet ist.

Geeignete Hard- und Software-Komponenten zur Verwirklichung eines derartigen Verfahrens im Rahmen einer Batch-Automatisierung sind aus dem Siemens-Katalog "Prozessleitsystem SIMATIC PCS 7 - Systemkomponenten, Ausgabe Juni 2013", Kapitel 13, bekannt. Mittels einer so genannten auf einem Batch-Client ablauffähigen "BATCH Software" erstellt ein Anwender ein Rezept zur Steuerung eines Batch- bzw. -Chargenprozesses, beispielsweise ein Rezept zur Herstellung von Kunstharz, Farbstoffen oder Düngemitteln. Ein derartiges Rezept weist gewöhnlich eine Vielzahl von parallelverzweigten Teilrezepten auf, die jeweils mehrere Rezeptelemente in Form von Rezeptoperationen oder Rezeptfunktionen, z. B. Dosieren, Heizen oder Rühren, sowie Transitionen umfassen. Die Rezeptoperationen und/oder die Rezeptfunktionen stehen während des Steuerbetriebs in Wirkverbindung mit geeigneten Hard- und Software-komponenten einer Automatisierungseinrichtung, die gewöhnlich mindestens ein mit Funktionsbaugruppen versehenes Automatisierungsgerät umfasst, welches über einen Bus mit einer Vielzahl von Feldgeräten verbunden ist. Während dieses Steuerbetriebs arbeitet ein Batch-Server des Batch-Systems das Rezept ab und korrespondierend dazu verarbeitet das mit dem Batch-Server online verbundene Automatisierungsgerät zu jeder Rezeptoperation bzw. Rezeptfunktion jeweils einen dieser Operation oder Funktion zugeordneten Softwarebaustein. Diese Softwarebausteine wurden vor dem Steuerbetrieb beispielsweise mittels eines Engineering-Systems in das Automatisierungsgerät geladen. Selbstverständlich werden weitere Software-Bausteine in das Automatisierungsgerät geladen, um Ergänzungen an dem Rezept mittels weiterer Rezeptelemente vornehmen zu können; denn zu den weiteren Rezeptelementen sind korrespondierende Software-Bausteine auf dem Automatisierungsgerät erforderlich, die während der Abarbeitung der Rezeptelemente - also während der Steuerung des Batchprozesses - mittels dieser Rezeptelemente angesprochen werden, wobei die Rezeptelemente den Software-Bausteinen gewöhnlich Sollwerte und die Software-Bausteine den Rezeptelementen Istwerte übermitteln.

Gewöhnlich sind Rezepte sehr umfangreich und aufgrund der Vielzahl von auf der Benutzeroberfläche dargestellten Rezeptelementen sehr schwer überschaubar. Dies ist insbesondere dann der Fall, wenn die Rezeptelemente in einer Vielzahl von verschiedenen Hierarchieebenen angeordnet sind, wodurch es zeitaufwendig ist, z. B bestimmte Rezeptelemente auf der Benutzeroberfläche zu finden, um auf dieses Element zuzugreifen bzw. um dieses Element in einer bestimmten Art und Weise zu beeinflussen bzw. zu verändern.

Der Erfindung liegt daher die Aufgabe zugrunde, ein Verfahren der eingangs genannten Art anzugeben, mittels welchem ein schneller Zugriff auf Rezeptelemente ermöglicht sowie ein Zugriff auf diese Rezeptelemente vereinfacht wird. Darüber hinaus ist ein Automatisierungssystem zu schaffen, welches zur Durchführung des Verfahrens geeignet ist.

Diese Aufgabe wird im Hinblick auf das Verfahren durch die im kennzeichnenden Teil des Anspruchs 1, bezüglich des Automatisierungssystems durch die im kennzeichnenden Teil des Anspruchs 6 angegebenen Maßnahmen gelöst.

Vorteilhaft ist, dass eine schneller Zugriff auf eine Selektionsgruppe mittels des Selektionsobjekts und somit auf die Rezeptelemente dieser Selektionsgruppe ermöglicht wird, wodurch insbesondere in kritischen Situationen bezüglich des Prozessablaufs die oder einzelne Rezeptelemente dieser Gruppe ausgewählt und beeinflusst werden können. Eine Selektionsgruppe kann gezielt ausgewählt werden, um deren Rezeptelemente zu bobachten und ggf. zu bedienen. Beispielsweise ist es für einen Anwender von Interesse, zu wissen, ob Rezeptelemente einer Selektionsgruppe noch laufen. Unabhängig von der Anzahl der Hierarchiestufen oder Darstellungsebenen sind die Selektionsobjekte, welche jeweils mit einem Selektionsnamen versehen sein können, auf der obersten Stufe der Bedieneroberfläche für den Anwender zugänglich.

In einer Ausgestaltung der Erfindung gemäß den im Anspruch 2 angegebenen Maßnahmen wird ermöglicht, in einem Offline- oder Online-Betrieb die Selektionsgruppen zu bilden sowie die Selektionsobjekte darzustellen und zu selektieren.

Mittels der im Anspruch 3 angegebenen Maßnahmen werden zusätzlich zu den Selektionsobjekten die Zustände der Rezeptelemente der Selektionsgruppen angezeigt. Beispielsweise wird ein Selektionsobjekt farblich dargestellt bzw. gekennzeichnet, was z. B. darauf hinweist, dass alle Rezeptelemente der mit diesem Selektionsobjekt versehenen Selektionsgruppe nicht mehr laufen.

In einer weiteren Ausgestaltung der Erfindung ist vorgesehen, dass die Selektionsgruppen automatisch nach rezeptspezifischen Kriterien gebildet werden. Ein Kriterium kann beispielsweise sein, alle Rezeptelemente "Dosieren" in einer Dosier-Selektionsgruppe automatisch zusammenzustellen, was bedeutet, dass die Dosier-Selektionsgruppe" automatisch mit allen Dosier-Rezeptelementen des Rezepts gebildet wird.

Um dem Anwender eine bessere Übersicht der Zuordnung von Selektionsobjekten zu Rezeptelementen einer Selektionsgruppe bereitzustellen und um schneller auf diese Rezeptelemente zugreifen zu können, werden Hilfslinien erzeugt und dargestellt, welche ausgehend von dem Selektionsobjekt zu diesen Rezeptelementen zeigen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen
Figur 1 ein Rezept für die Steuerung eines Batchprozesses und
Figur 2 ein weiteres Rezept mit Selektionsobjekten.

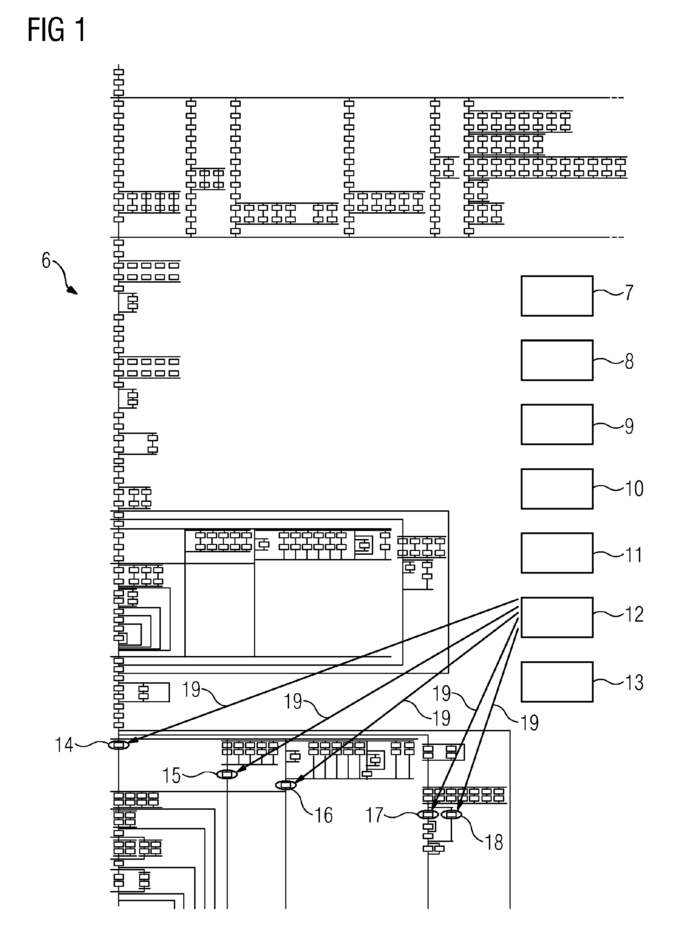

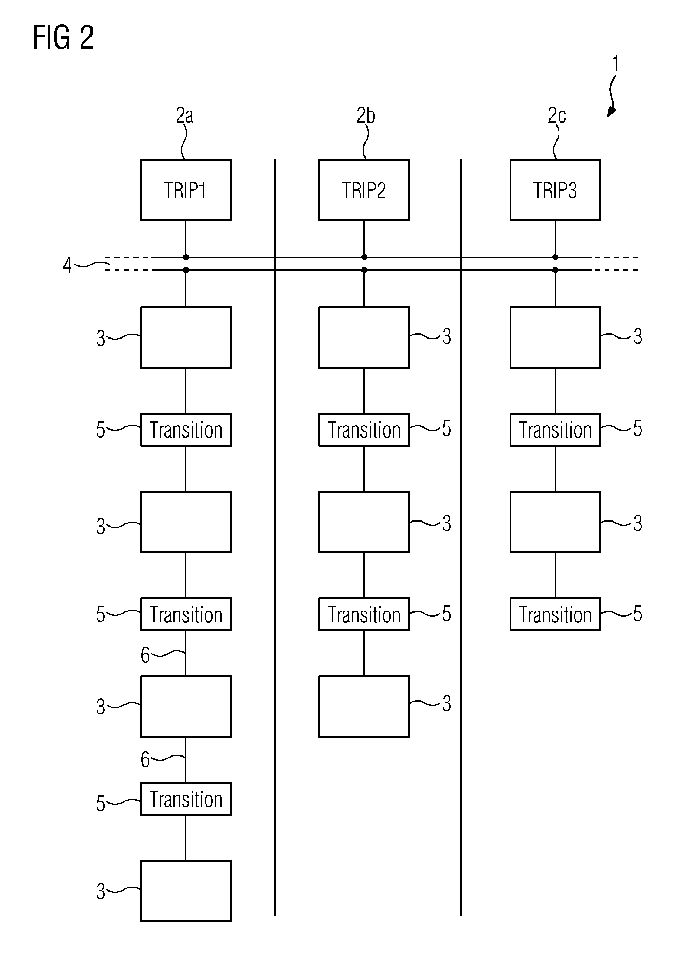

Die in den Figuren 1 und 2 dargestellten gleichen Teile sind mit gleichen Bezugszeichen versehen.

Es wird zunächst auf Figur 2 verwiesen, in welcher ein Rezept 1 eines Batch- bzw. Chargenprozesses gezeigt ist, das in einer an sich bekannten Art und Weise auf einer Anzeigeeinheit eines Batch-Clients eines Batch-Systems oder auf einer Anzeigeeinheit eines Engineering-Systems dargestellt ist. Dieses Rezept 1, welches ein Anwender mittels einer Batch-Software bzw. mittels eines Rezepteditors des mit einer geeigneten Benutzeroberfläche versehenen Batch-Clients erstellt, ist zur Steuerung des Batch- bzw. Chargenprozesses vorgesehen, beispielsweise eines Prozesses zur Herstellung von Kunstharz. Das Rezept 1 weist mehrere Teilrezepte 2a, 2b, 2c auf, die jeweils einen Teilprozess bzw. eine Prozessstufe auf einer Teilanlage steuern. Jedes dieser über eine Parallelverzweigung 4 verbundene Teilrezept 2a, 2b, 2c ist versehen mit einer Vielzahl von vertikal verbundenen Rezeptelementen, z. B. Rezeptoperationen (ROP) 3, oder Transitionen 5, wobei jede dieser Rezeptoperationen 3, z. B. eine Rezeptoperation "Heizen", "Dosieren" oder "Mischen", wiederum eine Vielzahl von Rezeptelementen aufweisen kann. Selbstverständlich kann das Rezept 1 weitere Parallelverzweigungen und/oder weitere Teile umfassen, z. B. Synchronisationslinien, Schleifen, Operatoranweisungen oder Alternativabzweigungen.

Das Rezept 1 steht während des Steuerbetriebs in Wirkverbindung mit geeigneten Hard- und Softwarekomponenten eines Automatisierungsgerätes. Dabei arbeitet während dieses Steuerbetriebs der Batch-Server sequentiell das Rezept 1 ab, wobei korrespondierend dazu das mit dem Batch-Server online verbundene Automatisierungsgerät zu jedem Rezeptelement jeweils einen diesem Rezeptelement zugeordneten Softwarebaustein bzw. Software-Funktionsbaustein abarbeitet.

Um sehr schnell auf eine Vielzahl von Rezeptelementen eines Rezeptes zugreifen zu können, werden Selektionsgruppen gebildet, welche jeweils ein Rezeptelement oder eine Vielzahl von Rezeptelementen umfassen. Diese Selektionsgruppen werden jeweils mit einem auf der grafischen Benutzeroberfläche dargestellten Selektionsobjekt versehen, wobei für den Fall, dass ein Anwender eins der Selektionsobjekte selektiert, alle Rezeptelemente der mit diesem Selektionsobjekt versehenen Selektionsgruppe für einen Zugriff mittels des Anwenders auswählbar dargestellt werden.

Zur näheren Erläuterung im Hinblick auf einen Zugriff auf alle Rezeptelemente einer Selektionsgruppe wird auf Figur 1 verwiesen, in welcher ein Rezept 6 und mehrere Selektionsobjekte 7, 8, ... 13 gezeigt sind, wobei das Rezept 6 umfangreich ist und eine Vielzahl von Rezeptelementen und Verzweigungen aufweist. Gewöhnlich werden auf der Bedieneroberfläche bzw. der Anzeigeeinheit des Batch-Clients bzw. Engineering-Systems zu einem Zeitpunkt nur ein Teil des Rezepts 6 vergrößert oder eine große Anzahl der Rezeptelemente und Verzweigungen stark verkleinert dargestellt, wobei im Falle einer vergrößerten Darstellung das Rezept über die Anzeigeeinheit "gescrollt" werden kann.

Im vorliegenden Ausführungsbeispiel wird angenommen, dass eine geeignete "Selektionsgruppenerstellungs-Software" - im Folgenden als Software bezeichnet - des Batch-Clients oder des Engineering-Systems sieben Selektionsgruppen gebildet hat, die jeweils mit einem der Selektionsobjekte 7 bis 13 versehen sind. Diese Selektionsgruppen werden während der Erstellung oder Änderung des Rezepts 6 oder während der Batchprozess-Steuerung gebildet. Die jeweilige Selektionsgruppe wird in der Art und Weise gebildet bzw. erzeugt, indem z. B. der Anwender auf dem Batch-Client oder dem Engineering-System diese Software startet und in einem ersten Schritt einen entsprechenden Button "Anlegen einer Selektionsgruppe" eines auf der grafischen Benutzeroberfläche dargestellten Menüs auswählt. In einem zweiten Schritt markiert der Anwender anschließend Rezeptelemente des Rezeptes 6 - beispielsweise Rezeptelemente 14 bis 18 - mittels einer Maus, wobei diese Markierungen anzeigen, dass die markierten Rezeptelemente zu dieser neu anzulegenden Selektionsgruppe gehören. In einem weiteren Schritt gibt der Anwender wiederum menügesteuert für diese markierten Rezeptelemente ein mit einem Selektionsnamen versehenes Selektionsobjekt - beispielsweise das Selektionsobjekt 12 - vor, bestätigt die Eingaben, wodurch die Software anschließend automatisch die markierten Rezeptelemente zu einer Selektionsgruppe zusammenfasst und dieser Selektionsgruppe das vorgegebene Selektionsobjekt zuordnet. Die derart erzeugte bzw. gebildete mit dem Selektionsobjekt versehene Selektionsgruppe ist damit abgeschlossen.

Anstatt die Rezeptelemente zur Bildung einer Selektionsgruppe manuell zu markieren, kann eine Selektionsgruppe nach Vorgabe eines rezeptspezifischen Kriteriums automatisch gebildet werden. Beispielsweise trägt der Anwender wiederum menügesteuert in ein dazu vorgesehenes Feld auf der grafischen Bedieneroberfläche ein Kriterium "Dosier-Rezeptelemente" ein, wodurch die Software automatisch alle Dosier-Rezeptelemente im Rezepts 6 aufsucht, diese markiert und nach Eingabe eines Selektionsobjekts mittels des Anwenders die markierten Rezeptelemente zu einer (Dosier-)Selektions-gruppe zusammenfasst sowie dieser Selektionsgruppe das eingegebene Selektionsobjekt zuordnet. Die Software kann selbstverständlich derart ausgebildet sein, dass diese nach Eingabe des Kriteriums "Dosier-Rezeptelemente" automatisch für diese Selektionsgruppe ein Selektionsobjekt, z. B. ein Selektionsobjekt "Dosier-Rezeptelemente", erzeugt.

Die jeweiligen Selektionsobjekte 7 bis 13, welche während der Steuerung des Batchprozesses auf der grafischen Bedieneroberfläche dargestellt werden, repräsentieren die Rezeptelemente der mit diesen jeweiligen Selektionsobjekten 7 bis 13 versehenen jeweiligen Selektionsgruppe, diese Rezeptelemente werden also unter dem jeweiligen Selektionsobjekt "zusammengefasst".

Nachdem die Selektionsgruppen gebildet wurden, kann der Anwender bzw. Operator während der Batchprozess-Steuerung auf die Rezeptelemente der jeweiligen Selektionsgruppe zugreifen, indem der Anwender das jeweilige Selektionsobjekt selektiert. Es wird darauf hingewiesen, dass sowohl die Bildung der Selektionsgruppen als auch die Selektion dieser Selektionsobjekte und die Anzeige der Rezeptelemente der selektierten Selektionsgruppen keine Auswirkungen auf das Rezept 6 bzw. auf die laufende Batchprozess-Steuerung haben. Mit anderen Worten: die Bildung einer Selektionsgruppe sowie deren Selektion beeinflussen nicht den laufenden Batch- bzw. Chargenprozess. Für den Fall, dass der Anwender beispielsweise das Selektionsobjekt 12 selektiert, werden unabhängig davon, welcher Teil bzw. Ausschnitt des Rezepts 6 gerade vor dieser Selektion auf der grafischen Bedieneroberfläche bzw. Anzeigeeinheit dargestellt wird, alle Rezeptelemente 14 bis 18 der mit diesem Selektionsobjekt 12 bezeichneten Selektionsgruppe für einen Zugriff mittels des Anwenders angezeigt. Der besseren Übersicht halber und zur Vereinfachung des Zugriffs auf die Rezeptelemente 14 bis 18 werden dem Anwender ferner Hilfslinien 19 dargestellt, welche ausgehend von dem Selektionsobjekt 12 zu den Rezeptelementen 14 bis 18 zeigen.

Die Software kann ferner derart ausgebildet sein, dass diese während der Batchprozess-Steuerung den Zustand der jeweiligen Rezeptelemente und/oder die Priorität der jeweiligen Rezeptelemente der mit dem Selektionsobjekt 12 versehenen Selektionsgruppe bestimmt und zusätzlich zum Selektionsobjekt anzeigt.

Zusätzlich zu der genannten Selektionsgruppe "Dosier-Rezeptelemente" kann die Software nach den Vorgaben des Anwenders weitere Selektionsgruppen bilden bzw. erzeugen. Beispielsweise kann eine Selektionsgruppe mit einer dynamischen Menge von Rezeptelementen gebildet werden, die mit entsprechenden Selektionsobjekten versehen werden. Z. B. selektiert der Anwender mittels des Selektionsobjekts 7 eine Selektionsgruppe "alle abgebrochenen Rezeptelemente" oder mittels des Selektionsobjekts 8 eine Selektionsgruppe "alle gerade laufenden Rezeptelemente". Dazu markiert - wie beschrieben - der Anwender die Rezeptelemente, die auf "Abbruch" oder "Aktiv" bzw. "Läuft" geprüft werden sollen, wobei die Software während der Batchprozess-Steuerung prüft, welche Rezeptelemente des Rezepts 6 abgebrochen wurden oder welche Rezeptelemente des Rezepts 6 noch laufen bzw. noch aktiv sind. Diese Rezeptelemente werden dem Anwender angezeigt, falls der Anwender das entsprechende Selektionsobjekt 7, 8 selektiert.
Je nach Bedarf und Vorgaben des Anwenders wird mittels der Software weitere Selektionsgruppe gebildet. Beispielsweise wird eine Selektionsgruppe gebildet, welche zum Beobachten von Rezeptelementen vorgesehen ist ("Laufen die Rezeptelemente einer Gruppe bereits", "Sind alle Rezeptelemente einer Gruppe bereits verarbeitet?", "Haben die Rezeptelemente einer Gruppe eine Verarbeitungslinie bereits überschritten?", "Ist gerade ein Transfervorgang der Rezeptelement einer Gruppe aktiv?", "Ist gerade eine Überwachung aktiv?").

Ferner wird eine Selektionsgruppe gebildet, um Laufzeitdaten für bestimme Rezeptelemente zu beobachten, anzuzeigen und für Diagnosezwecke aufzubereiten.
Darüber hinaus werden insbesondere Selektionsgruppen gebildet für
- Haltepunkte im Rezept 6 (Gruppe von Elementen, an denen das Rezept an einer "Haltelinie" sicher angehalten werden kann), wobei zu jedem Zeitpunkt diese Haltepunkte zur Laufzeit des Batchprozesses wieder entfernt werden können;
- Rezeptelemente, die relevant für eine Stoffbilanz sind;
- Indikatoren, um den Rezeptfortschritt - insbesondere in unterlagerten Ebenen - zu beobachten.

## Patentansprüche

1. Verfahren zum Zugriff auf Rezeptelemente (14, 15, ... 18) eines auf einer grafischen Benutzeroberfläche eines Batch-Clients darstellbaren Rezepts (6), welches zur Steuerung eines Batchprozesses mittels eines Batch-Servers vorgesehen ist, wobei während des Steuerbetriebs der Batch-Server das Rezept abarbeitet und korrespondierend dazu ein mit dem Batch-Server online verbundenes Automatisierungsgerät den Rezeptelementen (14, 15, ... 18) zugeordnete Softwarebausteine eines Steuerprogramms verarbeitet, **dadurch gekennzeichnet, dass** mehrere Selektionsgruppen gebildet werden, welche jeweils mindestens ein Rezeptelement (14, 15, ... 18) umfassen, wobei die Selektionsgruppen jeweils mit einem Selektionsobjekt (7, 8, ... 13) versehen werden, welches auf der grafischen Benutzeroberfläche dargestellt wird, wobei für den Fall, dass ein Anwender eines der Selektionsobjekte (7, 8, ... 13) selektiert, alle Rezeptelemente (14, 15, ... 18) der mit diesem Selektionsobjekt (7, 8, ... 13) versehenen Selektionsgruppe für einen Zugriff mittels des Anwenders auswählbar dargestellt werden.

2. Verfahren nach Anspruch 1, **dadurch gekennzeichnet, dass** während der Erstellung und/oder Änderung und/oder Ergänzung des Rezeptes (6) und/oder während der Batchprozess-Steuerung die Selektionsgruppen gebildet werden und/oder die Selektionsobjekte (7, 8, ... 13) darstell- und/oder selektierbar sind.

3. Verfahren nach Anspruch 1 oder 2, **dadurch gekennzeichnet, dass** zusätzlich mit dem jeweiligen dargestellten Selektionsobjekt (7, 8, ... 13) der Zustand der jeweiligen Rezeptelemente (14, 15, ... 18) der mit dem jeweiligen Selektionsobjekt (7, 8, ... 13) versehenen Selektionsgruppe bestimmt und angezeigt werden.

4. Verfahren nach einem der Ansprüche 1 bis 3, **dadurch gekennzeichnet, dass** die Selektionsgruppen automatisch nach rezeptspezifischen Kriterien gebildet werden.

5. Verfahren nach einem der Ansprüche 1 bis 4, **dadurch gekennzeichnet, dass** Hilfslinien (19) von dem jeweiligen Selektionsobjekt (7, 8, ... 13) zu den Rezeptelementen (14, 15, ... 18) der mit diesem Selektionsobjekt (7, 8, ... 13) versehenen Selektionsgruppe erzeugt und angezeigt werden.

6. Automatisierungssystem mit einem Automatisierungsgerät, mit einem Batch-Client und mit einem Batch-Server, wobei zur Steuerung eines Batchprozesses mittels des Batch-Servers ein auf einer grafischen Benutzeroberfläche des Batch-Clients darstellbares Rezept (6) vorgesehen ist, das eine Vielzahl von Rezeptelementen (14, 15, ... 18) umfasst, wobei ferner während des Steuerbetriebs der Batch-Server das Rezept abarbeitet und korrespondierend dazu ein mit dem Batch-Server online verbundenes Automatisierungsgerät zu den Rezeptelementen (14, 15, ... 18) zugeordnete Softwarebausteine eines Steuerprogramms verarbeitet, **dadurch gekennzeichnet, dass** der Batch-Client oder ein Engineering-System des Automatisierungssystems dazu ausgebildet ist,
- mehrere Selektionsgruppen zu bilden, welche jeweils mindestens ein Rezeptelement (14, 15, ... 18) umfassen,
- die Selektionsgruppen jeweils mit Selektionsobjekten (7, 8, ... 13) zu versehen und die Selektionsobjekte (7, 8, ... 13) auf der grafischen Bedienoberfläche darzustellen,
- aufgrund einer Selektion eines Selektionsobjekts (7, 8, ... 13) mittels eines Anwenders alle Rezeptelemente (14, 15, ... 18) der mit diesem Selektionsobjekt (7, 8, ... 13) versehenen Selektionsgruppe für einen Zugriff mittels des Anwenders auswählbar darzustellen.

7. Automatisierungssystem nach Anspruch 6, **dadurch gekennzeichnet, dass** das Engineering-System dazu ausgebildet ist, während der Erstellung und/oder Änderung und/oder Ergänzung des Rezeptes (6), die Selektionsgruppen zu bilden und/oder die Selektionsobjekte (7, 8, ... 13) darzustellen und/oder zu selektieren.

8. Automatisierungssystem nach Anspruch 6, **dadurch gekennzeichnet, dass** der Batch-Client dazu ausgebildet ist, während der Erstellung und/oder Änderung und/oder Ergänzung des Rezeptes (6) und/oder während der Batchprozess-Steuerung die Selektionsgruppen zu bilden und/oder die Selektionsobjekte (7, 8, ... 13) darzustellen und/oder zu selektieren.

9. Automatisierungssystem nach einem der Ansprüche 6 bis 8, **dadurch gekennzeichnet, dass** der Batch-Client dazu ausgebildet ist, zusätzlich mit dem jeweiligen dargestellten Selektionsobjekt (7, 8, ... 13) den Zustand der jeweiligen Rezeptelemente (14, 15, ... 18) der mit dem jeweiligen Selektionsobjekt (7, 8, ... 13) versehenen Selektionsgruppe zu bestimmen und anzuzeigen.

10. Automatisierungssystem nach einem der Ansprüche 6 bis 9, **dadurch gekennzeichnet, dass** der Batch-Client oder das Engineering-System dazu ausgebildet ist, die Selektionsgruppen automatisch nach rezeptspezifischen Kriterien zu bilden.

11. Automatisierungssystem nach einem der Ansprüche 6 bis 10, **dadurch gekennzeichnet, dass** der Batch-Client oder das Engineering-System dazu ausgebildet ist, Hilfslinien (19) von dem jeweiligen Selektionsobjekt (7, 8, ... 13) zu den Rezeptelementen der mit diesem Selektionsobjekt (7, 8, ... 13) versehenen Selektionsgruppe zu erzeugen und anzuzeigen.
